# EUROPEAN PATENT APPLICATION

(11) **EP 3 522 190 A1**
(43) Date of publication of application: **07.08.2019**
(21) Application number: 17856268.2
(22) Date of filing: 27.09.2017
(51) Int. Cl.: H01G 9/04, C25F 3/04, H01G 9/035

(54) **ELECTRODE FOIL AND ELECTROLYTIC CAPACITOR**

(30) Priority: 30.09.2016 JP 2016194520
(71) Applicant: Nippon Chemi-Con Corporation, Tokyo 141-8605 (JP)
(72) Inventor: YOSHIDA, Atsushi, Tokyo 141-8605 (JP)
(74) Representative: AWA Sweden AB
(86) International application number: PCT/JP2017/035058
(87) International publication number: WO 2018/062319

(57) **Abstract**

The present disclosure provides an electrode foil that satisfies both the strength and thinness of an electrode foil, and can improve the capacity of the entire foil, and an electrolytic capacitor that uses this electrode foil. A tunnel-shaped etching pit is formed on a surface of the electrode foil provided in the electrolytic capacitor used in a frequency region of 100 kHz or more, and the depth of the etching pit is 27 µm or less.

## Description

### TECHNICAL FIELD

The present disclosure relates to an electrode foil provided in an electrolytic capacitor used in a so-called high frequency range of 100 kHz or more.

### BACKGROUND ART

Electrolytic capacitor is formed by filling spaces with an electrolyte to closely contact a dielectric coating of an anode with a counter electrode, and includes a non-solid electrolytic capacitor in which an electrolyte is a liquid, a solid electrolytic capacitor in which an electrolyte is a solid, a hybrid type electrolytic capacitor in which an electrolyte is a liquid and a solid, and a bipolar electrolytic capacitor in which a dielectric coating is formed on both electrodes. This electrolytic capacitor is formed by impregnating a capacitor element in an electrolyte, and the capacitor element is formed by making an anode foil in which a dielectric coating is formed on a valve metal foil such as aluminum and a cathode foil formed of the same or another metal foil to face each other, and interposing a separator between the anode foil and the cathode foil.

The capacitance of the electrolytic capacitor is proportional to a surface area of the dielectric coating. In general, an enlargement treatment such as etching is performed on an electrode foil of the electrolytic capacitor, and the enlarged part on which the enlargement treatment is performed is subjected to a chemical conversion treatment, so that a dielectric coating has a high surface area. An electrochemical scheme is mainly used for etching in many cases.

As for an electrode foil used for an electrolytic capacitor for a low voltage application, an AC current is applied in a chloride aqueous solution, such as hydrochloric acid, a salt, or the like, and a spongy-like etching pit is formed on the surface. As for an electrode foil used for an electrolytic capacitor for a high voltage application, a direct current is applied in a chloride aqueous solution, and a tunnel-shape etching pit is formed on the surface of the electrode foil toward the center with respect to the thickness.

### CITATION LIST

### PATENT LITERATURE

Patent Document 1: JP H9-148200 A

### SUMMARY OF INVENTION

### TECHNICAL PROBLEM

In recent years, in order to further increase a capacitance of an electrolytic capacitor, enlargement is advanced from the surface of the electrode foil to a deeper part. However, along with this enlargement, the residual core part where the etching pit does not reach is becoming thinner, and countermeasures for strengthening the electrode foil become an issue.

An oxide film is formed on an etching layer on which an etching pit is formed by a chemical conversion treatment and the like, and this oxide film has low flexibility and low extensibility. In particular, when the etching pit becomes deeper as the enlargement advances and the surface area becomes larger, an amount of the oxide film increases, and the flexibility and extensibility of the electrode foil tend to decrease. Therefore, for example, in a wound type electrolytic capacitor, when the flexibility and extensibility of the electrode foil decrease and the electrode foil becomes hard, the electrode foil is bent, and the winding length of the electrode foil that can be accommodated in the case with same capacity decreases. When the winding length of the electrode foil decreases, the capacitance of the electrolytic capacitor decreases by the amount of the decreased length.

On the other hand, when thickening the electrode foil to have a certain thickness, for example, in a laminated type electrolytic capacitor, the number of electrode foils that can be laminated decreases, and the capacitance of the electrolytic capacitor decreases by the amount of the decreased number.

In order to solve the above problems in the conventional art, the present disclosure provides an electrode foil which achieves both the strength of an electrode foil and the thinness of the electrode foil, and which can improve a capacity of the entire foil, and an electrolytic capacitor using this electrode foil.

### SOLUTION TO PROBLEM

In order to achieve the above objective, an electrode foil according to the present disclosure has a tunnel-shape etching pit formed on a surface of the electrode foil, in which the depth of the etching pit is 27 µm or less. In addition, the depth of the etching pit is 12 µm or more and 27 µm or less.

As a result of an earnest research, the inventors found that, among each depth zone of the tunnel-shape etching pit, a depth zone in which a charge is sufficiently supplied at a frequency range of 110 kHz or more has a depth of 27 µmat the deepest. In addition, with the depth of the etching pit from 12 µm or more and up to 20 µm, an increase rate of the capacitance relative to the depth of the etching pit is favorable. In addition, with the depth of the etching pit from 20 µm or more and up to 27 µm, an advantage of deepening the etching pit can be obtained, even though the increase rate of the capacitance with respect to the depth of the etching pit slows down. That is, if the tunnel-shaped etching pit has a depth of 27 µm or less, the electrode foil can be thinned while sufficiently keeping a residual core part and a longer electrode foil can be accommodated in cases with the same capacity, thereby improving the capacity of the electrolytic capacitor. An electrolytic capacitor including this electrode foil is one aspect of the present disclosure.

### ADVANTAGEOUS EFFECTS OF INVENTION

According to the present disclosure, since there is no etching pit with a depth that does not contribute to the capacity of the electrolytic capacitor, the electrode foil can be thinned while sufficiently keeping a residual core part, the strength of the electrode foil can be ensured, and the capacity per unit volume of the electrolytic capacitor can be improved.

### BRIEF DESCRIPTION OF DRAWINGS

FIG. 1 is a graph showing a capacitance of a capacitor element of Comparative Example 1 when charged at each frequency.
FIG. 2 is a graph showing a capacitance of a capacitor element of Comparative Example 2 when charged at respective frequencies.
FIG. 3 is a graph showing a capacitance of a capacitor element of Comparative Example 3 when charged at each frequency.
FIG. 4 is a graph showing a capacitance of a capacitor element of Comparative Example 4 when charged at each frequency.
FIG. 5 is a graph showing a capacitance of a capacitor element of Example 1 when charged at each frequency.
FIG. 6 is a graph showing respective average values of capacitances of capacitor elements of Example 1 and Comparative Examples 1 to 4 when charged at each frequency.
FIG. 7 is a graph showing a capacitance of capacitor elements of Example 1 and Comparative Examples 1 to 4 when charged at each frequency.
FIG. 8 is a graph showing the relation between a depth of an etching pit and a capacitance when charging at 120 Hz and 100 kHz.

### DESCRIPTION OF EMBODIMENTS

Embodiments of an electrode foil and an electrolytic capacitor according to the present disclosure will be described below in detail. Note that the present disclosure is not limited to embodiments described below.

### (Electrode foil)

An electrode foil is suitable for an electrolytic capacitor which is for high voltage applications and which is driven in a high frequency range of 100 kHz or more, and is used for either or both of an anode foil and a cathode foil of an electrolytic capacitor. Examples of the electrolytic capacitor include a non-solid electrolytic capacitor in which an electrolyte is a liquid and a dielectric coating is formed on an anode foil, a hybrid type electrolytic capacitor in which an electrolyte is a liquid and a solid, and a bipolar electrolytic capacitor in which a dielectric coating is formed on both an anode foil and a cathode foil.

The electrode foil is a foil component made of a valve metal as a material. Examples of the valve metal include aluminum, tantalum, niobium, niobium oxide, titanium, hafnium, zirconium, zinc, tungsten, bismuth, and antimony, etc. The purity is desirably about 99.9% or more for an anode foil, and is desirably about 99% or more for a cathode, and impurities such as silicon, iron, copper, magnesium, and zinc may be contained.

This electrode foil has both surfaces of the electrode foil enlarged by an etching treatment. The enlarged electrode foil has many tunnel-shape etching pits that are dug down toward the center with respect to the thickness from both surfaces of the electrode foil, and aligned. The tunnel-shape etching pits are cylindrical holes, and the electrode foil has a residual core part where the etching pits do not reach. This tunnel-shape etching pit can be formed by chemical etching or electrochemical etching, and for example, is formed by applying a direct current to an acidic aqueous solution containing halogen ions with an electrode foil as an anode. Examples of the acidic aqueous solution include hydrochloric acid, sulfuric acid, nitric acid, phosphoric acid, table salts, or a mixture thereof.

The depth of this etching pit can be adjusted by a current application time. That is, the etching process is performed in two steps in total and in the first step, for example, an electrode foil is electrochemically etched with a direct current in an aqueous solution containing chlorine ions to form an etching pit. In the second step, for example, the electrode foil is electrochemically or chemically etched in an aqueous solution containing nitrate ions or chlorine ions to enlarge the already formed etching pit. The depth of the etching pit is influenced by a current application time in the first step.

The depth of the etching pit is 27 µm or less. This is because, in a frequency range of 100 kHz or more, a depth zone exceeding 27 µm does not contribute to increasing the capacitance, but rather causes disadvantages such as thinning the residual core part and thickening the electrode foil. Considering the cause, the etching pit can be represented by an equivalent circuit in which resistors for each depth zone in a depth direction are arranged in series and capacitors of each depth zone are connected in series to combined resistors to said depth zones. That is, the etching pit includes a RC circuit of a resistance component having a high resistance value according to the depth and capacitor components, and has a difference in a charging speed between a shallow depth zone and a deep depth zone. In a depth zone with a depth of 27 µm or more, there is no time constant R×C which is small enough to perform sufficient charging and discharging at an AC current of 100 kHz or more.

In a frequency range of 100 kHz or more, when the depth of the etching pit is from 12 µm or more to 20 µm or less, the capacitance increases substantially in proportion to the depth of the etching pit even though an increase rate of the capacitance with respect to the depth of the etching pit begins to slow down. Therefore, since the depth of the etching pit leads to an increase in the capacitance most efficiently, from the viewpoint of efficiency, the depth of the etching pit is preferably 12 µm or more and 20 µm or less. In addition, when the depth of the etching pit is 20 µm or more and 27 µm or less, in a frequency range of 100 kHz or more, the increase in capacitance is still expected with respect to the increase in the depth of the etching pit. Therefore, from the viewpoint of the capacitance, the depth of the etching pit is preferably 20 µm or more and 27 µm or less.

Here, the depth of the etching pit is measured and defined by a chemical conversion coating replica method. The chemical conversion coating replica method is a method of applying a chemical conversion coating to the enlarged electrode foil, dissolving an aluminum matrix in an iodine-methanol solution or the like, and observing the shape of the etching pit is observed by a scanning electron microscope (SEM). The depth of the etching pit is observed by the SEM, and 100 cases are selected at random and an average value thereof is obtained.

In addition, depending on applications, a dielectric coating is formed on the electrode foil by a chemical conversion treatment. The dielectric coating is formed by oxidizing a surface of the electrode foil together with an inner wall surface of the etching pit. Typically, this dielectric coating is formed by applying a voltage to a buffer solution containing no halogen ions with an electrode foil as an anode. Examples of the buffer solution include ammonium borate, ammonium phosphate, ammonium adipate, and ammonium organic acids, etc.

### (Electrolytic capacitor)

For an electrolytic capacitor using this electrode foil, although a wound type non-solid electrolytic capacitor in which an electrolytic solution is impregnated into a capacitor element formed by winding an electrode foil has been described as an example, the present disclosure is not limited thereto. A hybrid type electrolytic capacitor, a bipolar electrolytic capacitor, and a laminated type capacitor are also included.

In the electrolytic capacitor, the capacitor element is formed by winding a anode foil and cathode foil with a separator interposed therebetween in a cylindrical shape, in which one or both of the anode foil and the cathode foil are electrode foil having dielectric coating and an etching pit which stops a depth thereof at 27 µm or less. After the capacitor element is impregnated with an electrolytic solution, an anode terminal and a cathode terminal are drawn out. The anode terminal and the cathode terminal are connected to an external terminal provided in a sealing body having an elastic insulator, such as a rubber plate, attached to a front surface and a back surface of a rigid substrate insulation plate, such as a synthetic resin plate. Then, this capacitor element is housed in a bottomed tubular exterior case, sealed with a sealing component, and subjected to an aging treatment to form of a wound type capacitor.

Examples of the separator include celluloses such as Kraft, manila paper, esparto, hemp, rayon, and mixed papers thereof, polyester resins such as polyethylene terephthalate, polybutylene terephthalate, polyethylene naphthalate, and derivatives thereof, polyamide resins such as polytetrafluoroethylene resins, polyvinylidene fluoride resin, vinylon resin, aliphatic polyamides, semi-aromatic polyamides, and wholly aromatic polyamides, polyimide resins, polyethylene resins, polypropylene resins, trimethylpentene resins, polyphenylene sulfide resins, and acrylic resins, and these resins can be used alone or in mixtures.

Although not particularly limited, ethylene glycol is preferably used as a solvent of an electrolytic solution for high voltage applications, and other solvents may be used in combination. In addition, examples of the solvent in the electrolytic solution include monohydric alcohols, polyhydric alcohols, and oxyalcohol compounds, etc., as protic organic polar solvents. Examples of monohydric alcohols include ethanol, propanol, butanol, pentanol, hexanol, cyclobutanol, cyclopentanol, cyclohexanol, and benzyl alcohol, etc. In addition to ethylene glycol, examples of polyhydric alcohols include γ-butyrolactone, diethylene glycol, dipropylene glycol, 1,2-propanediol, glycerin, 1,3-propanediol, 1,3-butanediol, and 2-methyl-2,4-pentanediol, etc. Examples of oxyalcohol compounds include propylene glycol, glycerin, methyl cellosolve, ethyl cellosolve, methoxypropylene glycol, and dimethoxypropanol, etc.

In addition, examples of aprotic organic polar solvents include amides, lactones, sulfolanes, cyclic amides, nitriles, and oxides. Examples of amides include N-methylformamide, N,N-dimethylformanide, N-ethylforamide, N,N-diethylforamide, N-methylacetamide, N,N-dimethylacetamide, N-ethylacetamide, N,N-diethylacetamide, and hexamethylphosphoric amide, etc. Examples of cyclic amide solvents include γ-butyrolactone, N-methyl-2-pyrrolidone, ethylene carbonates, propylene carbonates, isobutylene carbonates, and isobutylene carbonates, etc. Examples of nitrile solvents include acetonitriles. Examples of oxide solvents include dimethylsulfoxides.

A solute in the electrolytic solution include an ammonium salt, an amine salt, a quaternary ammonium salt, and a cyclic amidine compound quaternary salt which have a conjugate base of an acid as an anion component and which are generally used for an electrolytic solution for driving an electrolytic capacitor. Examples of an amine constituting an amine salt include primary amines (methylamine, ethylamine, propylamine, butylamine, ethylenediamine, etc.), secondary amines (dimethylamine, diethylamine, dipropylamine, methylethylamine, diphenylamine, etc.), and tertiary amines (trimethylamine, triethylamine, tripropylamine, triphenylamine, 1,8-diazabicyclo(5,4,0)-undecene-7, etc.). Examples of a quaternary ammonium constituting a quaternary ammonium salt include tetraalkylammonium (tetramethylammonium, tetraethylammonium, tetrapropylammonium, tetrabutylammonium, methyltriethylammonium, dimethyldiethylammonium, etc.), and pyridium (1-methylpyridium, 1-ethylpyridium, 1,3-diethylpyridium, etc.). In addition, examples of cations constituting a cyclic amidine compound quaternary salt include cations in which the following compounds are quaternized. That is, imidazole monocyclic compounds (imidazole homologs such as 1-methylimidazole, 1,2-dimethylimidazole, 1,4-dimetyl-2-ethylimidazole, and 1-phenylimidazole, oxyalkyl derivatives such as 1-methyl-2-oxymethylimidazole and 1-methyl-2-oxyethylimidazole, and nitro and amino derivatives such as 1-methyl-4(5)-nitroimidazole and 1,2-dimethyl-4(5)-nitroimidazole), benzimidazoles (1-methylbenzimidazole, 1-methyl-2-benzylbenzimidazole, etc.), compounds having a 2-imidazoline ring (1-methylimidazoline, 1,2-dimethylimidazoline, 1,2,4-trimethylimidazoline,
1,4-dimethyl-2-ethylimidazoline,
1-methyl-2-phenylimidazoline, etc.), compounds having a tetrahydropyrimidine ring (1-methyl-1,4,5,6-tetrahydropyrimidine,
1,2-dimethyl-1,4,5,6-tetrahydropyrimidine, 1,8-diazabicyclo[5.4.0]undecene-7,1,5-diazabicyclo[4.3.0] nonene, etc.), and the like may be exemplified. Examples of the anion component include conjugate bases of acids such as carboxylic acids, phenols, boric acid, phosphoric acid, carbonic acid, and silicic acid.

### (Examples)

### (Example 1)

A capacitor element of Example 1 in which an electrode foil having the depth of a tunnel-shaped etching pit of 27 µm was used as an anode foil was prepared. In detail, an aluminum foil with a size of 20 mm×20 mm and an electrode foil thickness of 125 µm was used as an anode foil. This anode foil was subjected to a two-step etching treatment. In the etching treatment, in the first step, an aluminum foil was electrochemically etched with a direct current in an aqueous solution containing hydrochloric acid to form an etching pit was formed. In the second step, in an aqueous solution containing nitric acid, the aluminum foil was electrochemically or chemically etched to enlarge the already formed etching pit. The electrode foil in which the etching pit was formed was subjected to a chemical conversion treatment in an ammonium borate aqueous solution to form an oxide coating layer on a surface thereof. When the depth of the etching pit was measured by a chemical conversion coating replica method, the depth of the etching pit was 27 µm.

In addition, an aluminum foil with a size of 30 mm×25 mm and an electrode foil thickness of about 20 µm was used as a cathode foil, and the cathode foil was subjected to an AC etching treatment to form a spongy-like etching pit on a surface thereof. An aluminum lead wire in which a neck part thereof was coated with silicone was attached to the anode foil and the cathode foil. Two cathode foils were prepared, and one anode foil was superimposed via a Kraft separator with a size of 30 mm×25 mm interposed therebetween.

An electrolytic solution containing ethylene glycol as a main solvent and boric acid as a main solute was impregnated into the separator. Then, the superimposed anode foil, cathode foil, and separator layers were interposed between glass plates, and the capacitor element of Example 1 was completed.

### (Comparative Examples 1 to 4)

By adjusting a current application time in the etching treatment, a capacitor element of Comparative Example 1 using an anode foil in which the depth of the tunnel-shaped etching pit was 55 µm, a capacitor element of Comparative Example 2 using an anode foil in which the depth of the etching pit was 48 µm, a capacitor element of Comparative Example 3 using an anode foil in which the depth of the etching pit was 42 µm, and a capacitor element of Comparative Example 4 using an anode foil in which the depth of the etching pit was 33 µm were completed.

The capacitor elements of Comparative Examples 1 to 4 were produced in the same method and under the same conditions as the capacitor element of Example 1 except for the depth of the etching pit.

### (Capacitance measurement 1)

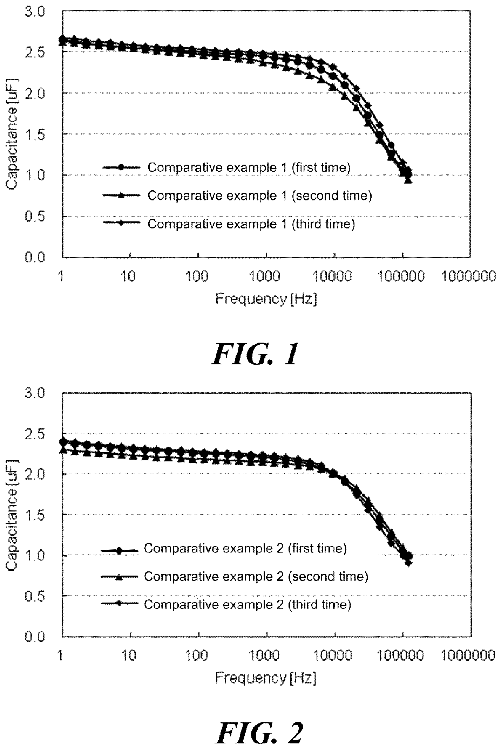

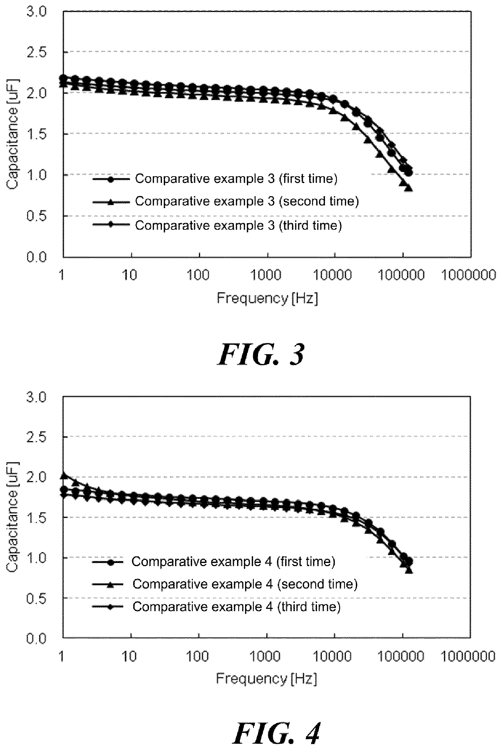

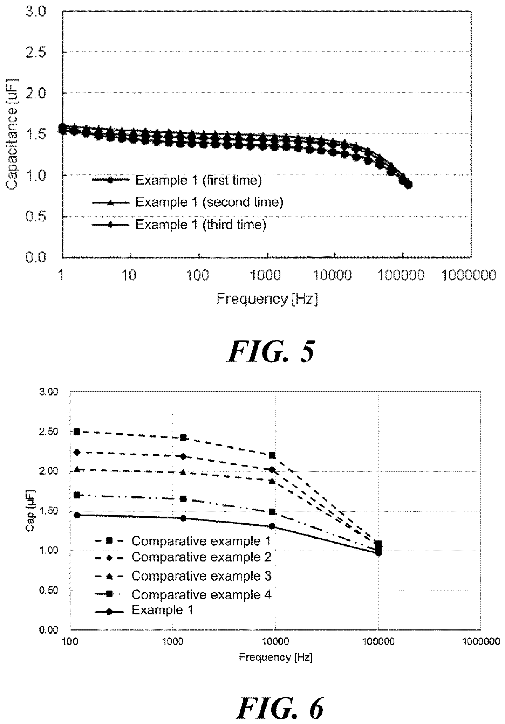

The capacitances of the capacitor elements of Example 1 and Comparative Examples 1 to 4 were measured. An LCR meter (4284A commercially available from Agilent Technologies) was used for measurement. In the measurement, an ambient temperature was 21 °C, an AC current level was 1.0 Vrms, and a measurement frequency was in a range of 1 Hz to 120 kHz. Charging and capacitance at each frequency were measured three times, and the results were plotted in a graph in which the horizontal axis represents a frequency and the vertical axis represents a capacitance. The results are shown in FIG. 1 to FIG. 7. The graph in FIG. 1 shows the results of Comparative Example 1, the graph in FIG. 2 shows the results of Comparative Example 2, the graph in FIG. 3 shows the results of Comparative Example 3, the graph in FIG. 4 shows the results of Comparative Example 4, and the graph in FIG. 5 shows the result of Example 1. The graph in FIG. 6 is a graph in which respective average values in Example 1 and Comparative Examples 1 to 4 are plotted.

As shown in FIG. 1 to FIG. 6, when the capacitor elements were measured at a frequency of less than 10 kHz, the capacitance increased according to the depth of the etching pit. In detail, compared to Comparative Examples 1 to 4, the capacitance of Example 1 was as small as 1.0 to 0.5 µF. However, at frequencies above 10 kHz, the higher the frequency, the smaller the difference in the capacitance according to the depth of the etching pit.

Accordingly, when measurement was performed at a frequency of 100 kHz, Example 1 had an average of 0.97 µF, Comparative Example 1 had an average of 1.09 µF, Comparative Example 2 had an average of 1.05 µF, Comparative Example 3 had an average of 1.07 µF, and Comparative Example 4 had an average of 1.00 µF. That is, at a frequency of 100 kHz, despite that the etching pit of Example 1 was as shallow as 27 µm, the capacitance of Example 1 and the capacitances of Comparative Examples 1 to 4 were all about 1.0 µF, and are not different.

In addition, when measurement was performed at a frequency of 120 kHz, Example 1 had an average of 0.90 µF, Comparative Example 1 had an average of 1.01 µF, Comparative Example 2 had an average of 0.98 µF, Comparative Example 3 had an average of 0.99 µF, and Comparative Example 4 had an average of 0.93 µF. At a frequency of 120 kHz, despite that the etching pit of Example 1 was as shallow as 27 µm, all of the capacitance of Example 1 and the capacitances of Comparative Examples 1 to 4 were about 0.95 µF, and are not different.

In this manner, at a frequency of 100 kHz or more, despite that the etching pit of Example 1 was as shallow as 27 µm, the capacitance of Example 1 and the capacitances of Comparative Examples 1 to 4 were substantially the same. This result indicates that, in a frequency range of 100 kHz or more, the entire area of the etching pit was efficiently charged and discharged when the depth of the etching pit was 27 µm or less,, and a depth area exceeding 27 µm did not contribute to the capacitance of the capacitor element.

Therefore, the electrode foil in which the depth of the etching pit was 27 µm or less can have the foil thickness reduced while having the residual core part with thickness that achieves a favorable strength. In addition, a wound type electrolytic capacitor can have more of such an electrode foil accommodated without being enlarged, and a laminated type electrolytic capacitor can have more of such electrode foils laminated without being enlarged, and can have a higher capacitance.

### (Examples 2 to 4)

A capacitor element of Example 2 in which an electrode foil having a depth of a tunnel-shaped etching pit of 20 µm was used as an anode foil, a capacitor element of Example 3 in which an electrode foil having a depth of a tunnel-shaped etching pit of 12 µm was used as an anode foil, and a capacitor element of Example 4 in which an electrode foil having a depth of a tunnel-shaped etching pit of 6 µm was used as an anode foil were produced in the same production method and under the same conditions as in Example 1.

### (Capacitance measurement 2)

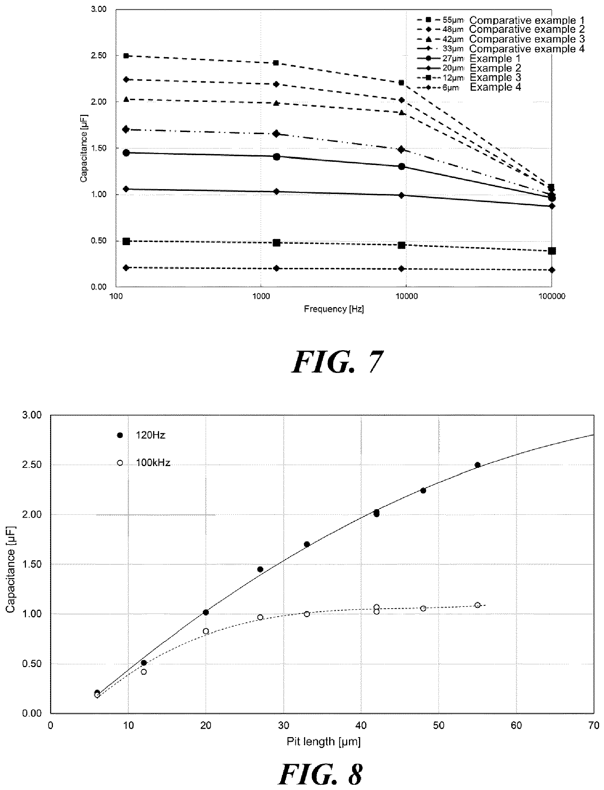

The capacitances of these capacitor elements of Examples 2 to 4 were measured under the same conditions as in Example 1 and Comparative Examples 1 to 4. The results are shown in FIG. 7 together with the average values of Example 1 and Comparative Examples 1 to 4. FIG. 7 is a graph in which measurement results of Examples 1 to 4 and Comparative Examples 1 to 4 are plotted from 1 Hz to 100 kHz. In addition, FIG. 8 shows the relation between the capacitance at each AC current and the depth of the etching pit when an AC current of 120 Hz and 100 kHz was applied to the capacitor elements of Examples 1 to 4 and Comparative Examples 1 to 4.

As shown in FIG. 7, when the depth of the etching pit was 6 µm, there was no change in the capacitance from 1 Hz to 100 kHz. When the depth of the etching pit was 12 µm, the capacitance began to slightly decrease in a high frequency range, and referring to Fig. 8, it can be found that this was a base point at which a difference between 120 Hz and 100 kHz began to occur.

In addition, as shown in FIG. 7, when the depth of the etching pit was 20 µm which is 1.6 times 12 µm, the capacitance at 100 kHz was 0.88 µF, and this is about 2.26 times 0.39 µF which is a capacitance at 100 kHz when the depth of the etching pit was 12 µm. On the other hand, when the depth of the etching pit was 27 µm which is 2.25 times 12 µm, the capacitance at 100 kHz was 0.97 µF, and this is about 2.49 times 0.39 µF which is a capacitance at 100 kHz when the depth of the etching pit was 12 µm.

Therefore, it was confirmed that, although an increase rate of the capacitance with respect to the depth of the etching pit began to slow down when the depth of the etching pit was from 12 µm or more to 20 µm or less, the capacitance according to the depth of the etching pit was efficiently obtained. In addition, it can be understood that, when the depth of the etching pit was 20 µm or more and 27 µm or less, although an increase rate of the capacitance with respect to the depth of the etching pit slows down, the increase in the capacitance was sufficient compared to a depth exceeding 27 µm. Therefore, it was confirmed that, in viewpoint of efficiency of the increase in the capacitance with respect to the depth of the etching pit, 12 µm or more and 20 µm or more is desirable, and in viewpoint of the strength of the electrode foil and the capacitance, 20 µm or more and 27 µm or less is desirable.

While a case in which a current with a frequency of only 100 kHz is applied has been described above in the present example, the present disclosure is not limited thereto. Even when a current in which a waveform at a high frequency range having a frequency of 100 kHz or more and a waveform at a low frequency range having a frequency of less than100 kHz are synthesized is applied to the electrode foil of the present disclosure, the same effects as in the example can be obtained. Such a capacitor can be applied to circuits coping to a higher switching frequency of power semiconductors recently used, for example, in an inverter circuit, and contributes to high efficiency and downsizing of the power converter.

For example, it is assumed that a current in which a frequency of 120 Hz and a frequency of 100 kHz are synthesized is applied to a circuit in which two capacitors using an electrode foil with a pit length of 55 µm are connected in parallel. In this case, in area region of 120 Hz, a capacitance corresponding to the pit length is derived. However, in region of 100 kHz, a derived capacitance is small compared to the length of the pit length.

On the other hand, it is assumed that a current in which a frequency of 120 Hz and a frequency of 100 kHz are synthesized is applied to a circuit in which one of two capacitors which is a capacitor using an electrode foil with a pit length of 55 µm and the other capacitor which is a capacitor using an electrode foil of 27 µm of the present example are connected in parallel.

In this case, although the capacitor using an electrode foil with a pit length of 55 µm derives a large amount of capacitance corresponding to an area of 120 Hz, since only a part of the pit length is used for the capacitance corresponding to area region of 100 kHz, the capacitance derived from a capacitor is small. On the other hand, since the capacitor using an electrode foil with a pit length of 27 µm has a thin electrode foil, many electrode foils can be wound for capacitor having the same size. Accordingly, in area region of 100 kHz, the capacitor using an electrode foil with a pit length of 27 µm can derive a larger amount of capacitance than the capacitor using an electrode foil with a pit length of 55 µm.

That is, for the frequency range which a sufficient capacitance is not derived in the capacitor using an electrode foil with a pit length of 55 µm, it is addressed by using the other capacitor using an electrode foil with a pit length of 27 µm and connected in parallel. Accordingly, by connecting a plurality of capacitors having different frequency components which can derive a capacitance is efficiently in parallel, the efficiency of the entire circuit becomes higher in a power converter to which a current waveform in which different frequency components are synthesized is applied.

## Claims

1. An electrode foil provided in an electrolytic capacitor used in a frequency range of 100 kHz or more, comprising:
a tunnel-shaped etching pit formed on a surface of the electrode foil,
wherein a depth of the etching pit is 27 µm or less.

2. The electrode foil according to claim 1,
wherein the depth of the etching pit is 12 µm or more and 27 µm or less.

3. The electrode foil according to claim 1 or 2,
wherein the electrode foil is an aluminum foil.

4. An electrolytic capacitor used in a frequency range of 100 kHz or more, comprising
the electrode foil according to any one of claims 1 to 3.

5. The electrolytic capacitor according to claim 4, comprising
an anode foil and a cathode foil formed of the electrode foil;
a separator between the anode foil and the cathode foil; and
an electrolytic solution mainly containing ethylene glycol.
